# EUROPEAN PATENT APPLICATION

(11) **EP 2 012 435 A2**
(43) Date of publication of application: **07.01.2009**
(21) Application number: 08158749.5
(22) Date of filing: 23.06.2008
(51) Int. Cl.: H04B 1/08

(54) **Radio communication device**

(30) Priority: 04.07.2007 JP 2007175906
(71) Applicant: NEC TOKIN Corporation, Sendai-shi, Miyagi 982-8510 (JP)
(72) Inventor: Onose, Katsuya c/o NEC TOKIN Corporation, Sendai-shi Miyagi 982-8510 (JP)
(74) Representative: Vossius & Partner

(57) **Abstract**

A radio communication device includes a spherical case, an outer case, and a liquid or gelled substance. The spherical case has a circuit portion for radio communication and a balance anchor located therein. The circuit portion includes a power supply device which has a solar cell and a secondary battery. The outer case has the spherical case located therein. The substance is contained between the spherical case and the outer case. At least a portion of the spherical case which is used as a light entering path, the outer case and the substance are transmissive to light in an optical wavelength range with which the solar cell can generate electricity. Friction between the spherical case and the substance is small so that the spherical case is rotatable within the outer case by the movement of the balance anchor by gravity.

## Description

The present invention relates to a radio communication device equipped with a self electricity generating type power supply that generates electricity by a solar cell.

There are two types of radio communication devices that are used outdoors, i.e., radio communication devices driven by an external power supply and radio communication devices driven by an internal battery. In the case a radio
communication device is used indoors for the automation system or the security system or the like of a building, it is often driven by an external power supply through an electrical wire. On the other hand, in the case a radio communication device is used to monitor the environment, an internal battery may be used to supply electricity to the device since the device is often used outdoors, especially in a place where supplying electricity by an external power supply through an electrical wire is difficult. In such situation, a secondary battery is used as the internal battery, and the radio communication device may be equipped with a solar cell. In such case, the life of the secondary battery can be extended by accumulating electricity generated by the solar cell in the secondary battery. In addition, the device itself can be driven by the solar cell.

However, the solar cell is mounted in a fixed place in such radio communication device. Therefore, when the device is overturned or knocked down, the solar cell that is placed on the upper surface of the device is not irradiated by sunlight. Consequently, the accumulation of electricity in the secondary battery is suspended, and the operation life of the radio communication device is reduced.

Japanese Unexamined Patent Application Publication No. 2004-280449 (which is called "Patent document 1" hereinafter) discloses an apparatus in which the inclination angle of a solar cell panel is mechanically controlled.

However, the above-mentioned Patent document 1 relies on the assumption that the device in which the solar cell is mounted is installed in a specific posture, in order to adjust the inclination angle of the solar cell. Therefore, when the device is knocked down or turned upside down, it is difficult to adjust the direction of the solar cell such that it is appropriately irradiated with sunlight. Furthermore, the larger the scale of the installation, the more difficult it becomes to take measure for preventing the device from toppling. Furthermore, if machinery is to be used to adjust the position of the solar cell, the scale of the machinery must be large, and the cost of building it is high.

Furthermore, if a transmitting/receiving antenna is used in a communication device, the transmitting/receiving antenna is mounted on the radio communication device such that the intended directivity of the antenna is achieved when the device is installed in a specific posture. Therefore, when the device is knocked down or turned upside down, the antenna's directivity may be changed and radio communication may become difficult.

In one aspect, the present invention has been made to overcome the above-mentioned problems in the related art, and one of the objects of the present invention is to provide a radio communication device capable of stabilizing the accumulation of electricity by a solar cell, and stabilizing the radio communication through an antenna.

In accordance with a first aspect of the present invention, a radio communication device includes a power supply device, a spherical case, a balance anchor, an outer case, and a liquid or gelled substance. The power supply device has an electricity generating function by a solar cell, and an electricity accumulating function by a secondary battery. The spherical case has a circuit portion for radio communication located therein, and the circuit portion contains the power supply device. At least a portion of the spherical case, which is used as a light entering path to the solar cell, is transmissive to light in an optical wavelength range with which the solar cell can generate electricity. The balance anchor is located within the spherical case. The outer case is formed from material that is transmissive to light in the optical wavelength range, and has the spherical case therein. The substance is contained between the spherical case and outer case, and transmissive to light in the optical wavelength range. Furthermore, friction between the spherical case and the substance is sufficiently small so that the spherical case can rotate within the outer case by the movement of the balance anchor by gravity. According to this aspect of the present invention, the spherical case is kept at a fixed angle by the balance anchor in the liquid or gelled substance having low friction regardless of the installation angle of the outer case. Therefore, the circuit portion located within the spherical case can be always used in an intended posture.

Furthermore, the solar cell may include at least one solar cell panel located within the spherical case in the radio communication device in accordance with the first aspect. Furthermore, the solar cell panel may be arranged such that the light receiving surface of the solar cell panel faces upward or sideward when the balance anchor is in a stable position where the balance anchor is located below the center of the spherical case. In this manner, since the solar cell panel is fixed in a position where it always faces a direction other than the direction to the ground surface, it allows the secondary battery to be stably charged in an environment where the device is irradiated with sunlight.

Furthermore, the radio communication device may include a transmitting/receiving antenna arranged on the same plane as the solar cell panel in accordance with the first aspect. Since the antenna is arranged in the vicinity of the solar cell panel, it eliminates the need of the dedicated space for the antenna, and thereby enabling the reduction in space. At the same time, since it is relatively easy to secure an appropriate installation place of the antenna in the vicinity of the solar cell panel, it is also suitable for communication in a low-frequency band.

Furthermore, the radio communication device may include a transmitting/receiving antenna arranged on the underside of the solar cell panel in accordance with the first aspect. Since the antenna is arranged on the underside of the electricity generating surface of the solar cell panel, it can save space in the radio communication device.

Furthermore, the radio communication device may include a transmitting/receiving antenna arranged on the lateral side of the solar cell panel in accordance with the first aspect. Since the transmitting/receiving antenna is arranged on the lateral side of the solar cell panel, it gives flexibility in the installation of the antenna, and facilitates the adjustment of the antenna's directivity. Furthermore, plural antennas may be arranged on the lateral sides of the solar cell panel. In this manner, it can facilitate the use of multiple radio frequency bandwidths.

Furthermore, the directivity of the transmitting/receiving antenna may be nondirectional. Since the nondirectional transmitting/receiving antenna is used, it can carry out stable communication even when the direction of the antenna is changed in a lateral direction (horizontal direction) by, for example, the unexpected movement of the outer case.

Furthermore, the transmitting/receiving antenna may have stronger directivity in a direction to which the light receiving surface of the solar cell panel faces. Since the antenna's directivity as well as the solar cell is fixed in a direction other than the direction to the ground surface, it can facilitate effective communication in the upward direction in which communication equipment having an object to be communicated is usually located.

Furthermore, the transmitting/receiving antenna may have the weakest directivity in a direction pointing from the center of the spherical case to the center of gravity of the balance anchor. By weakening the directivity in the direction to the ground surface, it reduces the energy consumption toward the direction in which usually no communication equipment having an object to be communicated is located, and thereby increasing the efficiency of transmission/reception of signals through the transmitting/receiving antenna.

As explained above, in the radio communication device in accordance with the first aspect of the present invention, even if the posture of the outer case is changed as the radio communication device itself is tilted or turned over, the spherical case can rotate within the outer case by the movement of the balance anchor by gravity. Therefore, it can substantially fix the posture of the circuit portion located within the spherical case in a desired position for the intended purpose of the device. Therefore, in a radio communication device equipped with a self electricity generating type power supply that generates electricity by a solar cell, it can enables stable power supply and stable communication regardless of the change of the device's posture.

The above and other objects, features and advantages of the present invention will become more fully understood from the detailed description given hereinbelow and the accompanying drawings which are given by way of illustration only, and thus are not to be considered as limiting the present invention.
Fig. 1 is an internal perspective view of a communication device in accordance with a first embodiment of the present invention;
Fig. 2 is a block diagram showing the circuit portion of a communication device in accordance with the first embodiment of the present invention;
Fig. 3A is a schematic external view showing the antenna directivity of a communication device in related art in ordinary use;
Fig. 3B is a schematic external view showing the communication device in related art when the communication device is overturned at 90 °;
Fig. 4 is a schematic external view showing the antenna directivity of a communication device in accordance with the first embodiment of the present invention;
Fig. 5 is a plan view showing the positional relation between a solar cell panel and a transmitting/receiving antenna in accordance with a second embodiment of the present invention;
Fig. 6 is a side view showing the positional relation between a solar cell panel and a transmitting/receiving antenna in accordance with a third embodiment of the present invention;
Fig. 7 is a perspective view showing the positional relation between a solar cell panel and transmitting/receiving antennas in accordance with a forth embodiment of the present invention;
Fig. 8 is a schematic external view showing the antenna directivity of a communication device in accordance with a fifth embodiment of the present invention;
Fig. 9 is a schematic external view showing the antenna directivity of a communication device in accordance with a sixth embodiment of the present invention;
Fig. 10 is a schematic external view showing the antenna directivity of a communication device in accordance with a seventh embodiment of the present invention; and
Fig. 11 is an internal perspective view of a communication device in accordance with an eighth embodiment of the present invention.

The invention will now be described herein with reference to illustrative embodiments. Those skilled in the art will recognize that many alternative embodiments can be accomplished using the teachings of the present invention and that the invention is not limited to the embodiments illustrated for explanatory purposes. First embodiment

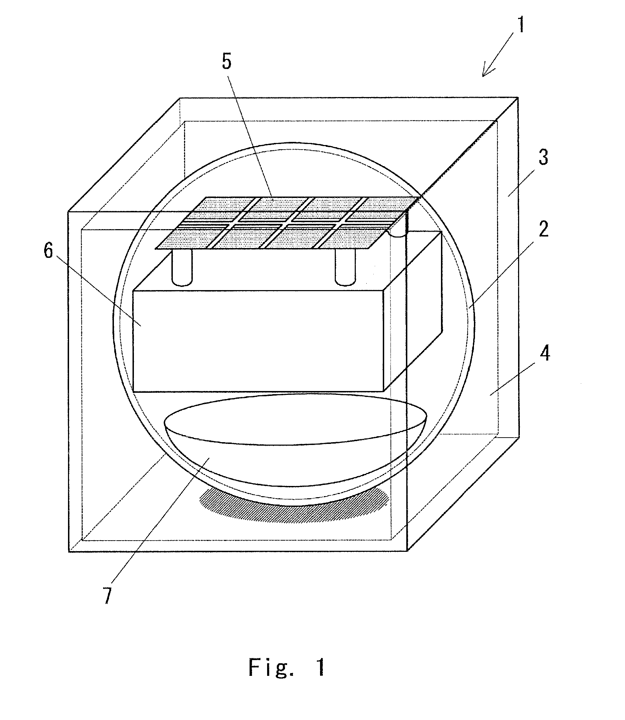

Fig. 1 is an internal perspective view showing the structure of a radio communication device 1 (which is simply called "communication device 1" hereinafter) in accordance with a first embodiment of the present invention. The communication device 1 includes a self electricity generating type power supply that generates electricity by a solar cell.

As shown in Fig. 1, the communication device 1 includes a spherical case 2, a rectangular parallelepiped outer case 3 enclosing the spherical case 2, and liquid having low friction 4 contained between the spherical case 2 and outer case 3. The spherical case 2 and outer case 3 are sufficiently transmissive to light in a wavelength range with which a solar cell 5 can generate electricity. For example, the spherical case 2 and outer case 3 may be formed from transparent acrylic resin. Incidentally, the spherical case 2 may have structure such that only the portion that is located opposite to a solar cell 5 (which is explained later) and used as a light entering path to the solar cell 5 is sufficiently transmissive to light in a wavelength range with which the solar cell 5 can generate electricity. Furthermore, the liquid 4 is also sufficiently transmissive to light in a wavelength range with which the solar cell 5 can generate electricity.

The spherical case 2 contains the solar cell panel 5, a circuit portion 6, and a balance anchor 7 within it. The balance anchor 7 is located in the lower space within the spherical case 2, and the solar cell panel 5 is located in the upper space within the spherical case 2 and the light receiving surface of the solar cell panel 5 faces the upper portion of the case 2.

With the above-mentioned structure, since the spherical case 2 is positioned such that the lower space where the balance anchor 7 is located always faces the ground surface direction regardless of the posture of the outer case 3, the solar cell panel 5 is always kept in a horizontal position and faces upward. Even if the communication device 1 is installed in an inclined place, the solar cell panel 5, which is located within the device 1, still faces upward in a horizontal position, and even if the angle of the device 1 is changed drastically when the outer case 3 is, for example, knocked over, the solar cell panel 5 immediately repositions itself and faces upward. In this manner, the communication device 1 can hold the solar cell panel 5 such that the light receiving surface of the solar cell panel 5 is irradiated with sunlight, and stably carry out the accumulation of electricity.

Although the solar cell panel 5 is located above the balance anchor 7 that is located in the lower portion within the spherical case 2 in this embodiment, the solar cell panel 5 may be located in the side portion of the spherical case 2 or similar place in other embodiments, provided that the solar cell panel 5 is not located in the same direction from the center of the spherical case 2 as the balance anchor 7. Furthermore, a gelled substance having low friction that is sufficiently transmissive to light in a wavelength range with which the solar cell 5 can generate electricity may substitute for the liquid 4.

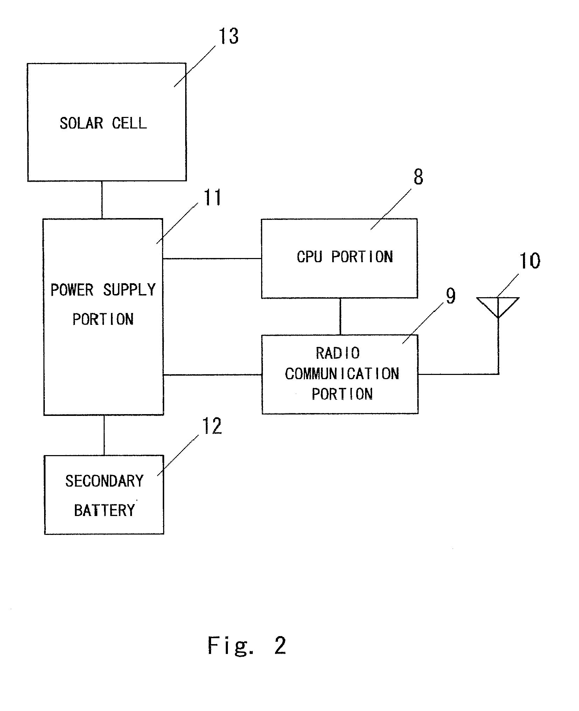

Fig. 2 is a block diagram showing the structure of the circuit portion of the communication device 1, shown as the circuit portion 6 in Fig. 1. As shown in Fig. 2, the circuit portion 6 includes a CPU portion 8, a radio communication portion 9, a transmitting/receiving antenna 10, a power supply portion 11, a secondary battery 12 and a solar cell 13. The radio communication portion 9 wirelessly sends a digital data signal received from the CPU portion 8 to other communication terminal through the transmitting/receiving antenna 10. Furthermore, the power supply portion 11 has a function to supply electrical power to drive the CPU portion 8 and radio communication portion 9, and a function to accumulate electricity generated by the solar cell 13 in the secondary battery 12.

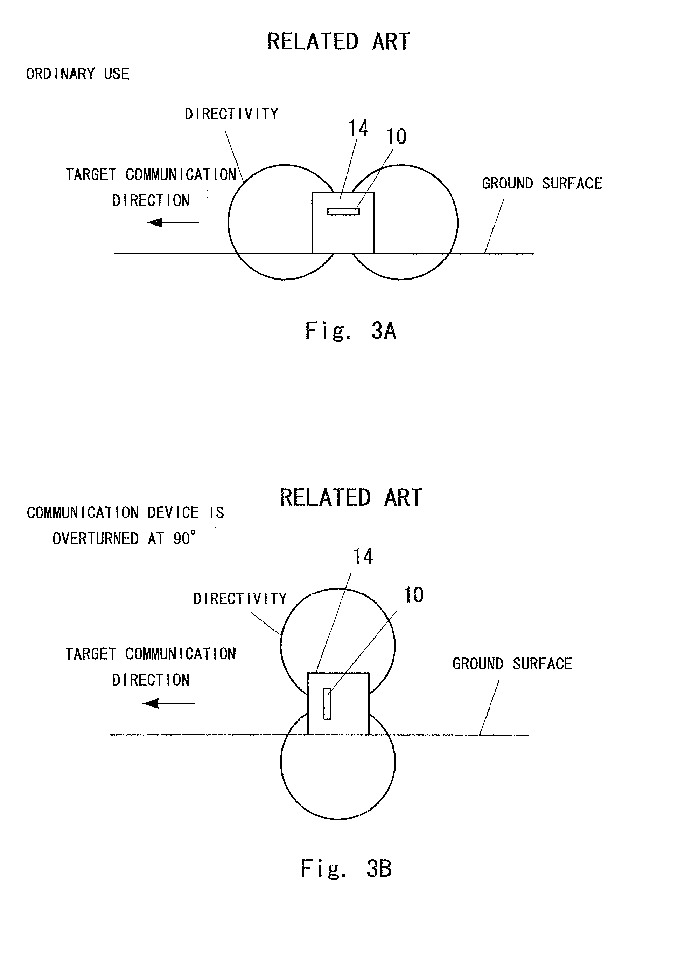

Figs 3A and 3A, which are drawn by the inventor of the present application as reference, are schematic external views showing the antenna directivities of a communication device in the related art, which does not have the characteristic structure of the communication device 1. In particular, Fig. 3A shows a device in ordinary use, and Fig. 3B shows the device in a state where the device is overturned at 90 °.

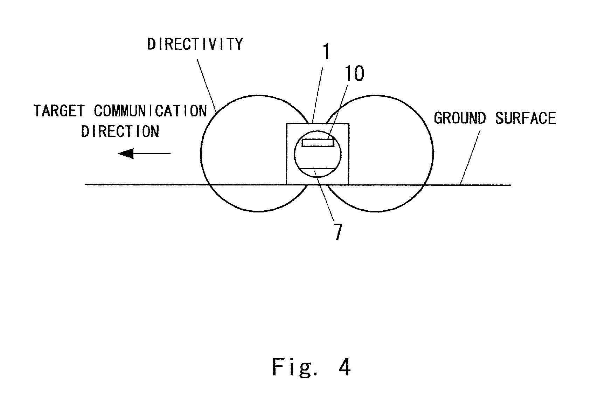

Meanwhile, Fig. 4 is a schematic external view showing an example of the antenna directivity of the communication device 1 in accordance with this embodiment of the present invention. In this embodiment, the transmitting/receiving antenna 10 is located in the circuit portion 6 such that the transmitting/receiving antenna 10 is in a horizontal position when the balance anchor 7 located within the spherical case 2 is in a stable position where the balance anchor 7 is located in the lower portion of the communication device 1. Furthermore, the directivity of transmitting/receiving antenna 10 has an 8-shape in the drawing.

The transmitting/receiving antenna 10 is fixed to the case in the communication device 14 in the related art shown in Figs. 3A and 3B. Therefore, when the communication device 14 is knocked over, the direction of the transmitting/receiving antenna 10 is also changed and its directivity may go out of the intended direction range. Consequently, the communication may become difficult. Meanwhile, as shown in Fig. 4, even if the communication device 1 is knocked over and the posture of the outer case 3 is changed, the transmitting/receiving antenna 10 located with the spherical case 2 is kept in a horizontal position and its directivity is substantially fixed in the position shown in Fig. 4. Therefore, the communication device 1 can carry out stable radio communication using the transmitting/receiving antenna 10.

### Second embodiment

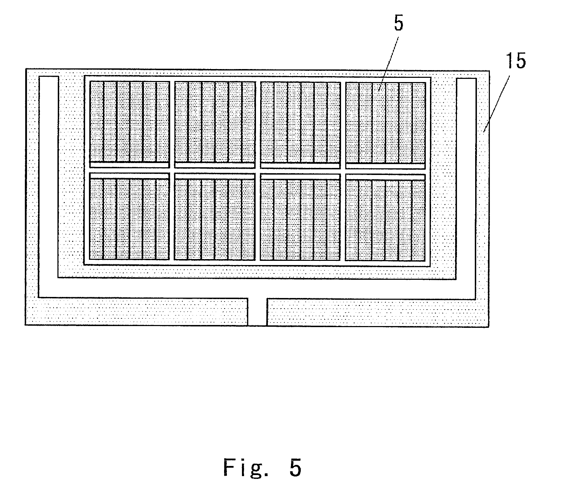

Fig. 5 is a plan view showing the positional relation between a solar cell panel 5 and a transmitting/receiving antenna 15 of a communication device in accordance with a second embodiment of the present invention. As shown in Fig. 5, the transmitting/receiving antenna 15 is located on the same plane as the solar cell panel 5. Structures of this embodiment other than the positional relation of the solar cell panel 5 and transmitting/receiving antenna 15 may be the same as those of the first embodiment.

With above-mentioned structure, it enables the compact design of the solar cell panel 5 and transmitting/receiving antenna 15, and achieves space-saving. Furthermore, since the transmitting/receiving antenna 15 is arranged such that it surrounds the solar cell panel 5, securing a long antenna for low-frequency band communication can be easily achieved.

### Third embodiment

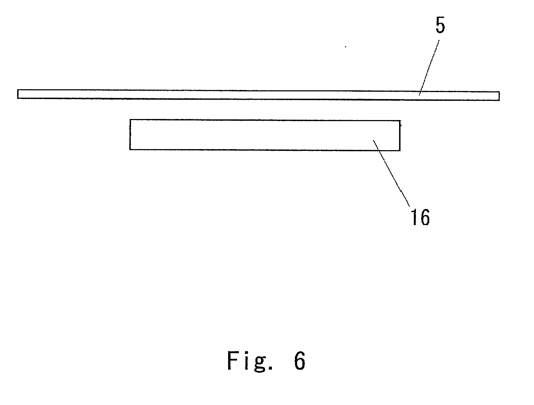

Fig. 6 is a side view showing the positional relation between a solar cell panel 5 and a transmitting/receiving antenna 16 in accordance with a third embodiment of the present invention. As shown in Fig. 6, the transmitting/receiving antenna 16 is located below the solar cell panel 5 in a communication device in accordance with this embodiment. Structures of this embodiment other than the positional relation of the solar cell panel 5 and transmitting/receiving antenna 16 may be the same as those of the first embodiment.

With above-mentioned structure, the transmitting/receiving antenna 16 does not interfere with the irradiation to the solar cell panel 5. In addition, since the transmitting/receiving antenna 16 is arranged at the underside of the solar cell panel 5, it enables the compact design of the solar cell panel 5 and transmitting/receiving antenna 16, and achieves space-saving.

### Forth embodiment

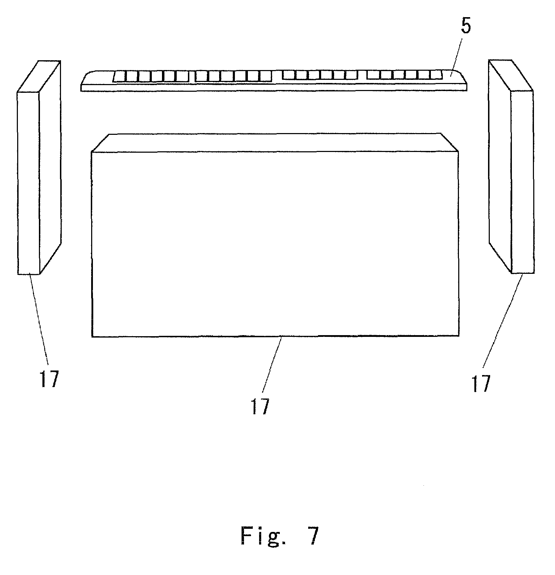

Fig. 7 is a side perspective view showing the positional relation between a solar cell panel 5 and transmitting/receiving antennas 17 in accordance with a forth embodiment of the present invention. As shown in Fig. 7, plural transmitting/receiving antennas 17 are located on the sides of the solar cell panel 5 in this embodiment. Structures of this embodiment other than the positional relation of the solar cell panel 5 and transmitting/receiving antennas 17 may be the same as those of the first embodiment. Since the transmitting/receiving antennas 17 are located on the sides of the solar cell panel 5, they do not interfere with the irradiation to the solar cell panel 5. In addition, it can facilitate the use of multiple bandwidths and the adjustment of the antenna's directivity by arranging several antennas 17. Fifth embodiment

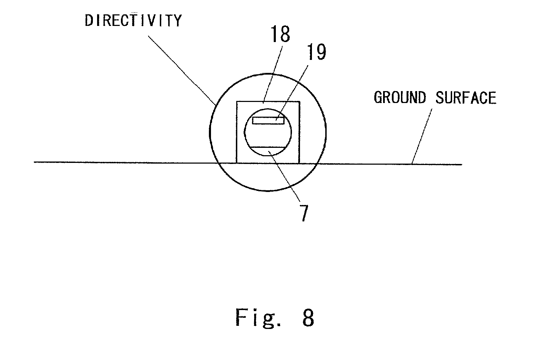

Fig. 8 is a schematic external view showing the antenna directivity of a communication device 18 in accordance with a fifth embodiment of the present invention. As shown in Fig. 8, a nondirectional transmitting/receiving antenna 19 is used in a communication device 18. Structures of the communication device 18 other than the directivity of the transmitting/receiving antenna 19 may be the same as those of the first embodiment.

When the angle of the transmitting/receiving antenna 10 is changed by the movement of the outer case, the position of the antenna returns to its original position by the balance anchor 7 in the first embodiment. However, if the direction of the transmitting/receiving antenna 10 is changed in a horizontal plane, the antenna's directivity in a horizontal plane can be also changed. Meanwhile, the nondirectional antenna 19 is used in the communication device 18. Therefore, even if the direction of the antenna 19 is changed in a horizontal plane, it can still carry out stable communication. Sixth embodiment

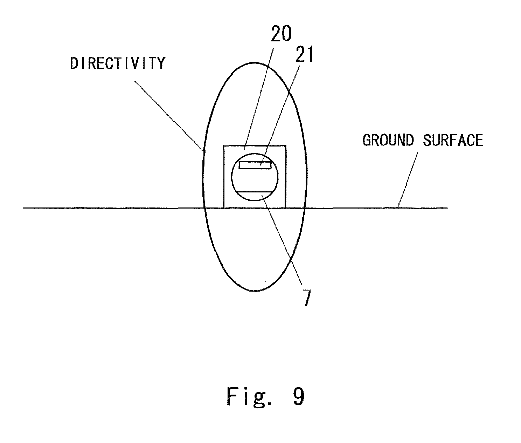

Fig. 9 is a schematic external view showing the antenna directivity of a communication device 20 in accordance with a sixth embodiment of the present invention. As shown in Fig. 9, a communication device 20 uses a transmitting/receiving antenna 21 having stronger directivity in a direction to which the light receiving surface of the solar cell panel (not shown) faces (i.e., upward and downward directions). Structures of the communication device 20 other than the directivity of the transmitting/receiving antenna 21 may be the same as those of the first embodiment. Similarly to the first embodiment, the solar cell panel (not shown) always faces upward in this embodiment. In the case where the communication device 20 is installed on the surface of the earth and the terminal to be communicated with the communication device 20 is located in the upward direction from the communication device 20, the communication device 20 can reduce the wasteful power consumption by directing the antenna's directivity upward from the communication device 20.

### Seventh embodiment

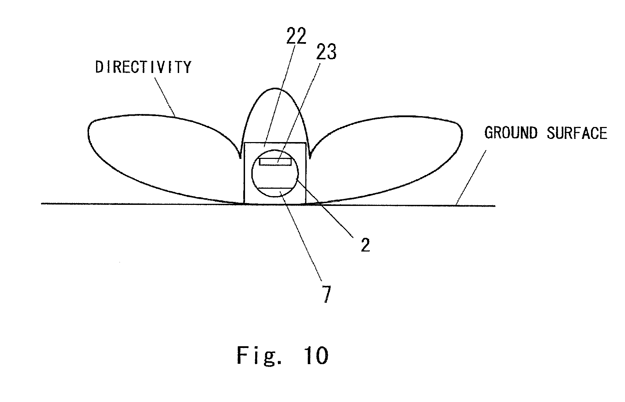

Fig. 10 is a schematic external view showing the antenna directivity of a communication device 22 in accordance with a seventh embodiment of the present invention. As shown in Fig. 10, a communication device 22 uses a transmitting/receiving antenna 23 having the weakest directivity in a direction pointing from the center of the spherical case 2 to the center of gravity of the balance anchor 7. Structures of the communication device 22 other than the directivity of the transmitting/receiving antenna 23 may be the same as those of the first embodiment. Similarly to the first embodiment, the postures of the solar cell panel (not shown) and transmitting/receiving antenna 23 are always kept in fixed positions by the rotation of the spherical case 2 as the balance anchor 7 moves downward in this embodiment. In the case where the communication device 23 is installed on the surface of the earth, it can reduce the wasteful power consumption by reducing the directivity of the antenna 23 toward the ground surface.

### Eighth embodiment

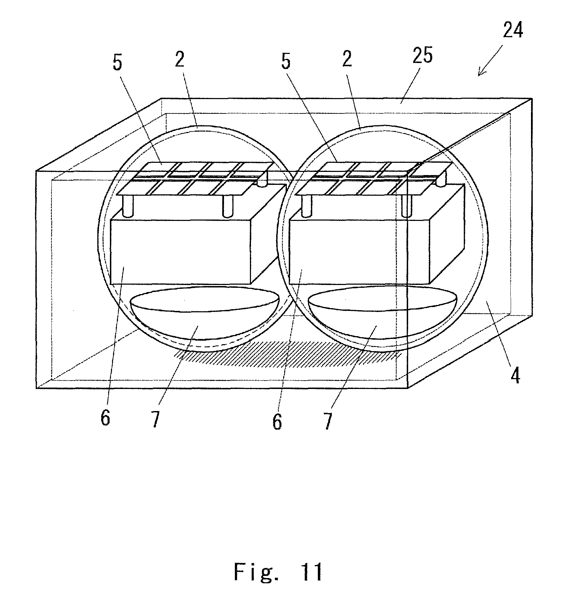

Fig. 11 is an internal perspective view of a communication device 24 in accordance with an eighth embodiment of the present invention. The structure in which one spherical case 2 is located in the outer case 3 is shown in the above-mentioned first embodiment. In contrast to the first embodiment, a communication device 24, as shown in Fig. 11, has two spherical cases 2 located within an outer case 25. Needless to say, three or more spherical cases 2 may be arranged within the outer case 25 by changing the shape and size of the outer case 25.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

## Claims

1. A radio communication device comprising:
a power supply device having an electricity generating function by a solar cell and an electricity accumulating function by a secondary battery;
a spherical case having a circuit portion for radio communication located therein, the circuit portion containing the power supply device, at least a portion of the spherical case which is used as a light entering path to the solar cell being transmissive to light in an optical wavelength range, the solar cell being capable of generating electricity by light in the optical wavelength range;
a balance anchor located within the spherical case;
an outer case formed from material transmissive to light in the optical wavelength range, the outer case having the spherical case located therein; and
a liquid or gelled substance contained between the spherical case and the outer case, the liquid or gelled substance being transmissive to light in the optical wavelength range;
wherein friction between the spherical case and the substance is sufficiently small so that the spherical case can rotate within the outer case by the movement of the balance anchor by gravity.

2. The radio communication device according to Claim 1, wherein:
the solar cell includes at least one solar cell panel located within the spherical case, and
the solar cell panel is arranged such that the light receiving surface of the solar cell panel faces upward or sideward when the balance anchor is in a stable position where the balance anchor is located below the center of the spherical case.

3. The radio communication device according to Claim 2, further comprising a transmitting/receiving antenna arranged on the same place as the solar cell panel.

4. The radio communication device according to Claim 2, further comprising a transmitting/receiving antenna arranged on the underside of the solar cell panel.

5. The radio communication device according to Claim 2, further comprising a transmitting/receiving antenna arranged on the lateral side of the solar cell panel.

6. The radio communication device according to any one of Claims 3 to 5, wherein the directivity of the transmitting/receiving antenna is nondirectional.

7. The radio communication device according to any one of Claims 3 to 5, wherein the transmitting/receiving antenna has stronger directivity in a direction to which the light receiving surface of the solar cell panel faces.

8. The radio communication device according to any one of Claims 3 to 5, wherein the transmitting/receiving antenna has the weakest directivity in a direction pointing from the center of the spherical case to the center of gravity of the balance anchor.
